# EUROPÄISCHE PATENTSCHRIFT

(11) **EP 3 331 159 B1**
(45) Veröffentlichungstag und Bekanntmachung des Hinweises auf die Patenterteilung: **19.08.2020**
(21) Anmeldenummer: 17204917.3
(22) Anmeldetag: 01.12.2017
(51) Int. Cl.: H02S 30/20

(54) **SOLARZELLENANORDNUNG**
SOLAR CELL ASSEMBLY
DISPOSITIF FORMANT CELLULES SOLAIRES

(30) Priorität: 02.12.2016 DE 102016014342
(43) Veröffentlichungstag der Anmeldung: 06.06.2018
(73) Patentinhaber: Meier, Marcus, 50767 Köln (DE)
(72) Erfinder: Meier, Marcus, 50767 Köln (DE)
(74) Vertreter: Patentanwälte Bauer Vorberg Kayser

(56) Entgegenhaltungen:
- EP-A1- 1 601 022
- WO-A2-2011/096007
- WO-A2-2013/061354
- WO-A2-2014/036582
- FR-A1- 2 988 221

## Beschreibung

Die Erfindung bezieht sich auf eine Solarzellenanordnung nach dem Oberbegriff des Anspruchs 1. Eine derartige Solarzellenanordnung ist aus WO 2013/061354 A2 bekannt.

Die einzelnen Solarzellen nehmen Licht auf, vorzugsweise Sonnenlicht und wandein es direkt um in elektrische Energie. Es handelt sich also um sogenannte photovoltaische Zellen, die elektrische Bauelemente darstellen. Im derzeitigen Stand der Technik gibt es verschiedene Zelltypen, Insbesondere aus Silizium. Vorzugsweise werden möglichst dünne Zellen für die Erfindung eingesetzt, es handelt sich also vorzugsweise um Zellen In Dünnschichttechnik. Vorzugsweise werden aber auch polykristalline Dickschichtzellen eingesetzt.

Aus EP 34 211 A2 ist eine Solarzellenanordnung bekannt, der das Licht über ein Sammellinsensystem zugeleitet wird. Aus DE 20 2013 003 101 U1 ist eine Photovoltaik-Vorrichtung bekannt, bei der mindestens zwei Solarzellenmodule mit ihren photovoltaischen Zellen zueinander weisend einen Raum aufspannen. Aus DE 10 2007 054 323 A1 ist eine Photovoltaik-Vorrichtung mit mindestens einer seitlich angebrachten Solarzelle bekannt. Eine ähnliche Photovoltaik-Vorrichtung zeigt auch die DE 10 2007 023 583 A1.

Aus DE 19795946 A1 ist eine Vorrichtung zur Nutzung von Solarenergie bekannt, bei der ein großflächiges Lichtsammelelement Sonnenlicht einfängt, das dann konzentriert wird und über einen Lichtverteiler wieder austritt und zu Beleuchtungszwecken verwendet werden kann.

Der Erfindung liegt die Aufgabe zugrunde, das durch eine Eintrittsfläche der Solarzellenanordnung eintretende Licht möglichst optimal zu nutzen und die Ausrichtung der Zellen dem wechselnden Sonnenstand anpassen zu können, dabei soll eine Alternative zu der technisch aufwendigen und komplizierten Lösung nach der WO 2013/061354 A2 angegeben werden und ästhetisch sein.

Diese Aufgabe wird gelöst durch die Merkmale des Anspruchs 1.

Bei dieser Solarzellenanordnung wird durch die schwenkbaren Flügel eine variable Ausrichtung der Flügeloberflächen, auf denen Solarzellen angeordnet sind, erreicht. Die gesamte Anordnung kann sich öffnen und schließen wie die Blüte einer Blume. Unabhängig von der Ausrichtung der zentralen Achse der Solarzellenanordnung zur Sonne lassen sich die Flügel stets so einstellen, dass zumindest ein Flügel optimal oder möglichst günstig vom Sonnenlicht beleuchtet wird.

Wenn kein Sonnenlicht einfällt, beispielsweise nachts oder bei Gewitter, Regen, Schnee oder einem Sandsturm, können die Flügel auf das zentrale Innenteil geklappt werden. Die Solarzellenanordnung nimmt dann eine Schutzposition ein. Um hierbei eine möglichst gute Abdeckung des zentralen Innenteils und auch der Solarzellen zu erreichen, Ist es vorteilhaft, wenn zwei gegenüberliegende Flügel so weit wie möglich aufeinander zugeklappt werden, sodass ein Dach entsteht, und die weiteren Flügel so weit wie möglich an diese beiden Flügel heran zu klappen.

Vorzugsweise werden die Flügel durch die Antriebsvorrichtung synchron und gleichzeitig bewegt. Lediglich für den oben diskutierten Fall ohne Sonnenlicht ist eine separate Steuerung der Flügel bzw. einzelner Flügelgruppen vorteilhaft. Es ist daher vorteilhaft, in den Positionen bzw. Ausrichtungen der Flügel, In denen Sonnenlicht empfangen werden kann, eine synchrone und gleichzeitige Bewegung der Flügel durchzuführen. Lediglich für die Bewegung in die Schutzposition Ist es vorteilhaft, einzelne Flügel bzw. einzelne Flügelgruppen unabhängig von den anderen zu bewegen.

Das von der Sonne parallel in die Anordnung einfallende Licht trifft auch das zentrale Innenteil. Dieses hat an seiner Oberfläche Solarzellen und/oder Spiegel. Die Spiegel sind vorzugsweise so ausgerichtet, dass das Licht auf die Flügel reflektiert wird. Vorzugsweise werden diejenigen Oberflächenbereiche des zentralen Innenteils, die Sonnenstrahlen direkt empfangen, mit Solarzellen versehen. Dies gilt insbesondere für diejenigen Oberflächenbereiche des zentralen Innenteils, die so orientiert sind, dass dort aufgebrachte Spiegel nicht zu den Flügeln reflektieren.

Vorzugsweise sind die Flügel baugleich. Vorzugsweise sind sie rechteckförmig. Die Basis hat vorzugsweise die Form eines gleichmäßigen Vielecks, insbesondere hat sie Form eines Quadrats oder Sechsecks. Das zentrale Innenteil ist vorzugsweise in seiner Form der Ausbildung der Basis angepasst. Bei einer quadratischen Basis ist das zentrale Innenteil vorzugsweise eine gerade Pyramide mit quadratischer, der Fläche der Basis entsprechender Grundfläche. Wenn das zentrale Innenteil als Kugelkappe ausgebildet ist, füllt die Basisfläche dieser Kugelkappe die Fläche der Basis möglichst vollständig aus. Der Rand der Basisfläche des zentralen Innenteils liegt auf einem Kreis. Dieser verläuft möglichst nahe den Seitenkanten der Basis, auf jedem Fall aber nicht außerhalb der Basis.

Vorzugsweise haben die Flügel eine quer zu ihrer Schwenkachse bestimmte Flügellänge, die größer ist als der Abstand des Scheitelpunktes des zentralen Innenteils von der Basis. Die Basis ist vorzugsweise als eine Platte ausgebildet. Das zentrale Innenteil ist vorzugsweise innen hohl. Der im zentralen Innenraum vorhandene Hohlraum kann genutzt werden für das unterbringen einer elektronischen Steuervorrichtung, der Antriebsvorrichtung und anderen Teilen. Dort kann insbesondere auch ein Konverter untergebracht sein, der die Spannung der Solarzellen in einen anderen Spannungswert und/oder in Wechselspannung umsetzt.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die unter Bezugnahme auf die Zeichnung im Folgenden näher erläutert werden. In dieser Zeichnung zeigen:

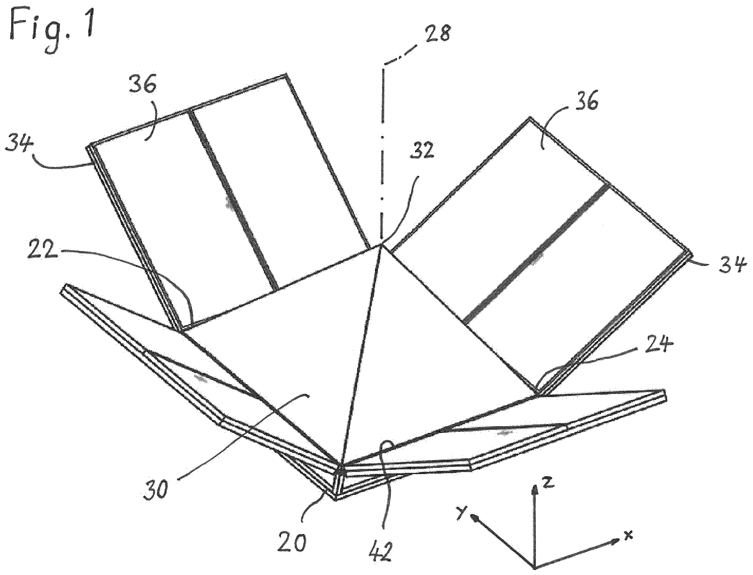

- Fig. 1:: eine perspektivische Darstellung der Solarzellenanordnung mit Blick von schräg oben,

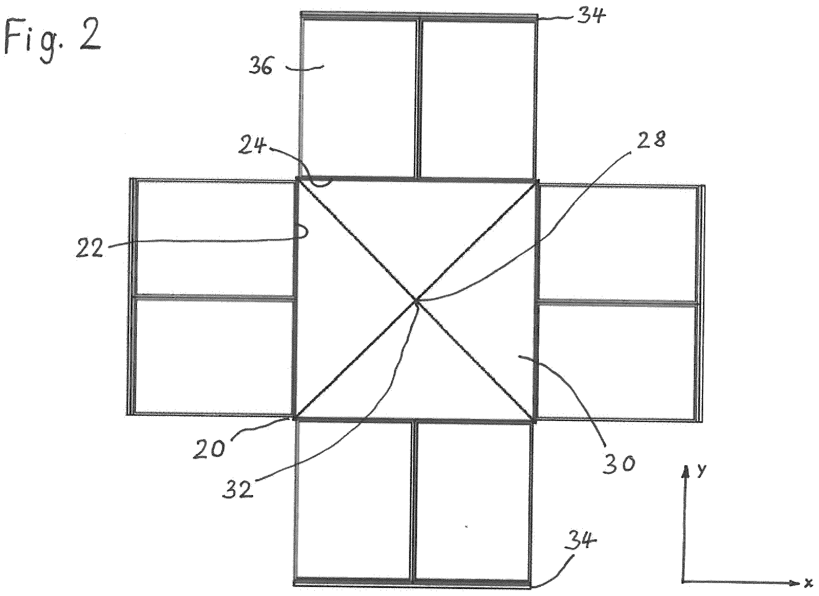

- Fig. 2:: eine Seitenansicht der Solarzellenanordnung gemäß Fig. 1, dabei ist ein vorderer Flügel nicht dargestellt,

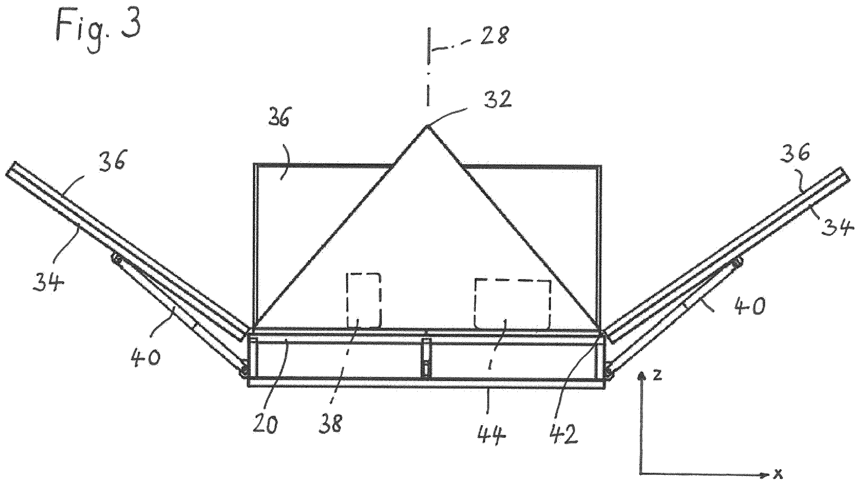

- Fig. 3:: eine Draufsicht auf die Solarzellenanordnung gemäß Fig. 1,
- Fig. 4:: eine Seitenansicht wie Fig. 3, jedoch nun für ein 2. Ausführungsbeispiel mit Kugelkappe als zentralem Innenteil.

Für die Beschreibung der Solarzellenanordnung wird ein rechtshändiges, rechtwinkliges x-y-z-Koordinatensystem verwendet.

Die Solarzellenanordnung hat eine Basis 20, die Basis 20 ist Tragvorrichtung für alle anderen Teile, auf die im Folgenden noch eingegangen wird. Sie kann Befestigungsvorrichtungen aufweisen, um die gesamte Anordnung auf beliebigen Unterlagen, beispielsweise einem Boden, zu befestigen. In den gezeigten Ausführungsbeispielen ist die Basis als Rohrrahmen ausgeführt, es werden Rohre mit Rechteckprofil verwendet. Die Basis ist ähnlich einer Palette für den Transport von Waren ausgebildet. Sie hat eine gewisse Höhe, die in z-Richtung bestimmt ist. Sie hat eine Oberseite, die in der x-y-Ebene liegt. Die Basis 20 ist den beiden Ausführungsbeispielen durch einen Quader begrenzt. Sie hat vier Seitenkanten 22, 24, die sich im Bereich einer Oberseite 26 befinden. Diese Oberseite 26 kann durch eine Platte realisiert sein, die den Rohrrahmen nach oben abschließt. Die Oberseite 26 kann aber auch offen sein oder es sind nur diejenigen Bereiche der Oberseite 26 bedeckt, die nach oben hin offen sind. Vorzugsweise ist die Basis 20 seitlich und unten offen, wie in beiden Ausführungsbeispielen gezeigt.

Die Solarzellenanordnung hat eine zentrale Achse 28. Sie verläuft in z-Richtung und durch die Mitte der Oberseite 26. Die Solarzellenanordnung hat weiterhin ein zentrales Innenteil 30. Es befindet sich oberhalb der Basis 20 und ist mit dieser verbunden. Das zentrale Innenteil 30 hat einen Scheitelpunkt 32. Dieser ist der am weitesten von der Basis 20 entfernte Punkt des zentralen Innenteils 30. Er befindet sich auf der zentralen Achse 28. Im 1. Ausführungsbeispiel ist das zentrale Innenteil 30 eine regelmäßige vierseitige Pyramide mit quadratischer Grundfläche. Die Grundfläche entspricht der Fläche der Oberseite 26 der Basis 20. Im 2. Ausführungsbeispiel ist das zentrale Innenteil 30 eine Kugelkappe. Ihre Höhe liegt bei etwa 85 % des Radius der Kugel. Vorzugsweise wird eine Halbkugel verwendet. Die Kugelkappe hat eine Kappenhöhe, die vorzugsweise im Bereich von 50-100 % des Radius der Kugel liegen kann.

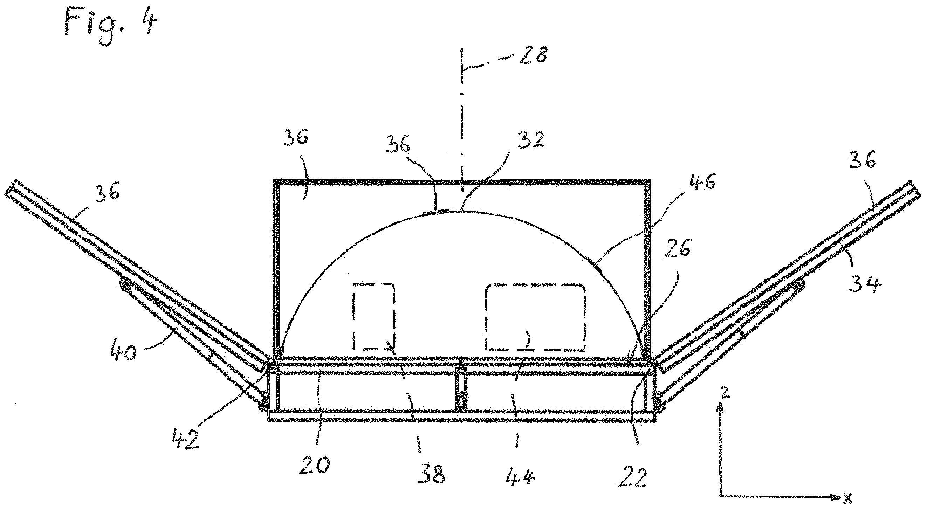

Die Außenseite des zentralen Innenteils 30 ist mit Solarzellen 36 und Spiegeln 46 versehen. Hierzu wird insbesondere auf Fig. 4 verwiesen. Diejenigen Bereiche der Außenseite, von denen eine Reflexion in Richtung der zentralen Achse 28 einfallenden Lichtes nicht zu einem Flügel 34 gelangen kann, sind vorzugsweise mit Solarzellen 36 belegt. Dies gilt insbesondere für diejenigen Bereiche, die in Nähe des Scheitelpunktes 32 sind. Andere Bereiche der Außenseite sind mit planen Stücken eines Spiegels 46 (ähnlich einer Discokugel) oder in der Wölbung verspiegelt, also eine Verspiegelung der gekrümmten Oberfläche des zentralen Innenteils 30.

An den vier Seitenkanten 22, 24 sind jeweils Flügel 34 um eine Schwenkachse 42 schwenkbar angelenkt. Die Flügel 34 sind rechteckförmig. Auf den Oberseiten der Flügel 34, die der zentralen Achse 28 zugewandt sind, sind die Flügel 34 mit Solarzellen 36 belegt. Sie sind möglichst vollflächig belegt. Wenn die Flügel 34 in die x-y-Ebene geklappt sind, befinden sich die Solarzellen 36 oben, sind also unmittelbar dem einfallenden Licht ausgesetzt. Jeder Flügel 34 ist mit einer Antriebsvorrichtung 38 verbunden, die Stellarme 40 für jeden einzelnen Flügel 34 hat. Diese Stellarme 40 sind an den Flügeln 34 und an einem unteren Teilbereich der Basis 20 angelenkt. Sie sind beispielsweise als Zylinder/Kolbeneinheit ausgebildet. In einer anderen Ausführung sind sie nur an den Flügeln 34 und nicht an der Basis 20 eingelenkt und mit weiteren Antriebsteilen, die hier nicht dargestellt sind, bewegungsverbunden. Die Antriebsvorrichtung 38 kann mechanisch und oder hydraulisch arbeiten. Wesentliche Teile der Antriebsvorrichtung 38 sind in einem Hohlraum unter dem zentralen Innenteil 30 angeordnet.

Vorzugsweise hat die Antriebsvorrichtung 38 zwei Betriebszustände. In einem 1. Betriebszustand werden die Flügel 34 gleichzeitig und synchron verschwenkt. Der 1. Betriebszustand liegt vor, wenn die Solarzellenanordnung Licht empfängt und elektrische Leistung abgibt. Die Schwenkwinkel der Flügel 36 sind begrenzt auf maximal 120, vorzugsweise maximal 90° ausgehend von einer Position, in der die Flügel 36 in der x-y-Ebene liegen. Der 2. Betriebszustand ist für den Ruhe- oder Schutzzustand vorgesehen. In diesem Betriebszustand können die Flügel 36 gruppenweise oder auch einzeln bewegt werden. Zwei gegenüberliegende Flügel 36 werden in der Ausbildung nach dem 1. Ausführungsbeispiel soweit geschwenkt, bis sich ihre freien Enden berühren und ein Dach gebildet wird. Die beiden anderen Flügel 36 werden dann so weit hochgeklappt, dass die zentrale Achse 28 in ihrer Ebene liegt, dies ist bei ca. 90° gegeben.

In beiden Ausführungsbeispielen ist der Abstand des Scheitelpunktes 32 von der Basis 20 kleiner als die Flügellänge der Flügel 34, gemessen von der Schwenkachse 22 bzw. 24 bis zum freien Ende. In anderen, nicht gezeigten Ausführungsbeispielen ist der Scheitelpunkt 32 weiter von der Basis 20 entfernt als die Flügellänge der Flügel 34 beträgt.

Die Solarzellenanordnung nach beiden Ausführungsbeispielen ist jeweils drehsymmetrisch um 90°. Die Basis wird durch n=4 Seitenkanten 22,24 gebildet. Das zentrale Innenteil 30 im 1. Ausführungsbeispiel ist drehsymmetrisch um 90°. Die Kugelkappe im 2. Ausführungsbeispiel ist drehsymmetrisch um beliebige Drehwinkel. Die Drehwinkel beziehen sich jeweils auf Winkel um die zentrale Achse 28.

Das zentrale Innenteil 30 hat eine Basisfläche. Sie verläuft parallel zur Oberseite 26. In der Regel ist das zentrale Innenteil 30 im Bereich seiner Basisfläche offen, also von unten aus zugänglich. Die Basisfläche kann aber auch physisch ausgebildet sein als Wand. Die Basisfläche hat Abmessungen, die gleich ausgerichteten Abmessungen der Basis 20 zu mehr als 80 %, insbesondere mehr als 90 % entsprechen. Die Basisfläche soll den zur Verfügung stehenden Platz auf der Oberseite 26 so weit wie möglich nutzen. Dies ist im 1. Ausführungsbeispiel vollständig der Fall.

Die Solarzellenanordnung zur Erzeugung elektrischer Energie aus Licht mit mehreren Solarzellen 36, mit einer Basis 20, die mehrere Seitenkanten hat 22, 24, mit einer zentralen Achse 28, die quer zur Basis 20 verläuft, mit mehreren Flügeln 34, wobei jeweils ein Flügel 34 an einer Seitenkante 22, 24 der Basis 20 um eine Schwenkachse 42 schwenkbar angelenkt ist, wobei die Solarzellen 36 auf einer der zentralen Achse 28 zugewandten Oberseite der Flügel 34 angeordnet sind, hat eine Antriebsvorrichtung 38 zum Schwenken der Flügel 34 um ihre jeweilige Schwenkachse 42, und ein zentrales Innenteil 30, das auf der Basis 20 befestigt ist und das eine Außenfläche aufweist. Die Außenfläche ist mit Solarzellen 36 und/oder mit Spiegeln versehen. Das zentrale Innenteil 30 weist einen am weitesten von der Basis 20 entfernten Scheitelpunkt 32 auf, der auf der zentralen Achse liegt 28.

### Bezugszeichenliste

- 20: Basis
- 22, 24: Seitenkante
- 26: Oberseite
- 28: zentrale Achse
- 30: zentrales Innenteil
- 32: Scheitelpunkt
- 34: Flügel
- 36: Solarzelle
- 38: Antriebsvorrichtung
- 40: Stellarm
- 42: Schwenkachse
- 44: Steuervorrichtung
- 46: Spiegel

## Patentansprüche

1. Solarzellenanordnung zur Erzeugung elektrischer Energie aus Licht
- mit mehreren Solarzellen (36),
- mit einer Basis (20), die mehrere Seitenkanten hat (22, 24),
- einer zentralen Achse (28), die quer zur Basis (20) verläuft,
- mit mehreren Flügeln (34), wobei jeweils ein Flügel (34) an einer Seitenkante (22, 24) der Basis (20) um eine Schwenkachse (42) schwenkbar angelenkt ist,
- die Solarzellen (36) sind auf einer der zentralen Achse (28) zugewandten Oberseite der Flügel (34) angeordnet,
- mit einer Antriebsvorrichtung (38) zum Schwenken der Flügel (34) um ihre jeweilige Schwenkachse (42), und
- mit einem zentralen Innenteil (30), das auf der Basis (20) befestigt ist, das Außenflächen aufweist, die mit Solarzellen (36) und/oder mit Spiegeln versehen sind,
**dadurch gekennzeichnet, dass** das zentrale Innenteil (30) die Form einer Pyramide, eines Kegels oder einer Kugelkappe hat, dass das zentrale Innenteil (30) eine Basisfläche aufweist, welche Abmessungen hat, die gleichgerichteten Abmessungen der Basis (20) zu mehr als 80 % entsprechen, dass das zentrale Innenteil (30) einen am weitesten von der Basis (20) entfernten Scheitelpunkt (32) aufweist, der auf der zentralen Achse (28) liegt, und dass die einzelnen Flügel (34) ausgehend von einer Winkelposition, in der sie sich in der Ebene der Basis (20) befinden, zumindest bis zu einer Winkelposition schwenkbar sind, in der sie in Anlage am zentralen Innenteil (30) sind.

2. Solarzellenanordnung nach Anspruch 1, **dadurch gekennzeichnet, dass** die Basis (20) ein Vieleck mit n gleichlangen Seitenkanten (22, 24) ist, und dass n Flügel (34) vorhanden sind, wobei n eine natürliche Zahl ist, vorzugsweise hat n den Wert 4 oder 6.

3. Solarzellenanordnung nach einem der vorangegangenen Ansprüche,
**dadurch gekennzeichnet, dass** das zentrale Innenteil (30) eine Drehsymmetrie um die zentrale Achse aufweist, die 360°/n beträgt, wobei n die Anzahl der Seitenkanten (22, 24) der Basis (20) ist, die ein regelmäßiges Vieleck ist.

4. Solarzellenanordnung nach einem der vorangegangenen Ansprüche,
**dadurch gekennzeichnet, dass** das zentrale Innenteil (30) eine Basisfläche aufweist, welche Abmessungen hat, die gleichgerichteten Abmessungen der Basis (20) zu mehr als 90 % entsprechen.

5. Solarzellenanordnung nach einem der vorangegangenen Ansprüche,
**dadurch gekennzeichnet, dass** sie weiterhin eine Steuervorrichtung (44) aufweist, die in einem Innenraum des zentralen Innenteils (30) angeordnet ist.

6. Solarzellenanordnung nach einem der vorangegangenen Ansprüche,
**dadurch gekennzeichnet, dass** die Antriebsvorrichtung in einem Innenraum des zentralen Innenteils angeordnet ist.

7. Solarzellenanordnung nach einem der vorangegangenen Ansprüche,
**dadurch gekennzeichnet, dass** die Flügel (34) eine quer zu ihrer Schwenkachse (42) bestimmte Flügellänge aufweisen, die größer ist als der Abstand des Scheitelpunktes (32) des zentralen Innenteils (30) von der Basis (20).

8. Solarzellenanordnung nach einem der vorangegangenen Ansprüche,
**dadurch gekennzeichnet, dass** die Flügel (34) rechteckförmig sind.

9. Solarzellenanordnung nach einem der vorangegangenen Ansprüche,
**dadurch gekennzeichnet, dass** die Basis (20) ein regelmäßiges n-Eck mit n gleichlangen Seitenkanten (22, 24) ist, und dass die Winkel zwischen benachbarten Seitenkanten (22, 24) gleich sind.

10. Solarzellenanordnung nach einem der vorangegangenen Ansprüche,
**dadurch gekennzeichnet, dass** die Antriebsvorrichtung (38) in einem 1. Betriebszustand alle Flügel (34) gleichzeitig und synchron schwenkt.

11. Solarzellenanordnung nach einem der vorangegangenen Ansprüche,
**dadurch gekennzeichnet, dass** das zentrale Innenteil (30) innen hohl ist

## Claims

1. A solar cell assembly for generating electrical energy from light
- with several solar cells (36),
- with a base (20) having several lateral edges (22, 24), a central axis (28) extending transversely to the base (20),
- with several wings (34), wherein one wing (34), respectively, is hinged to a side edge (22, 24) of the base (20) in a manner pivotable about a pivot axis (42),
- the solar cells (36) are disposed on a top side of the wings (34) facing towards the central axis (28),
- with a drive device (38) for pivoting the wings (34) about their respective pivot axis (42), and with a central inner part (30), which is mounted on the base (20), which has outer surfaces provided with solar cells (36) and/or with mirrors,
**characterized in that** the central inner part (30) has the shape of a pyramid, a cone or a spherical cap, that the central inner part (30) has a base surface having dimensions corresponding to identically oriented dimensions of the base (20) to an extent exceeding 80%, that the central inner part (30) has an apex (32) furthest from the base (20), which is located on the central axis (28), and that the individual wings (34), starting from an angular position in which they are located in the plane of the base (20), can be pivoted at least into an angular position in which they abut against the central inner part (30).

2. The solar cell assembly according to claim 1, **characterized in that** the base (20) is a polygon with n side edges (22, 24) of equal length, and that n wings (34) are provided, n being a natural number; preferably, n has the value 4 or 6.

3. The solar cell assembly according to any one of the preceding claims, **characterized in that** the central inner part (30) has a rotational symmetry about the central axis, which is 360°/n, wherein n is the number of the side edges (22, 24) of the base (20), which is a regular polygon.

4. The solar cell assembly according to any one of the preceding claims, **characterized in that** the central inner part (30) has a base surface having dimensions corresponding to identically oriented dimensions of the base (20) to an extent exceeding 90%.

5. The solar cell assembly according to any one of the preceding claims, **characterized in that** it further comprises a control device (44) disposed in an inner space of the central inner part (30).

6. The solar cell assembly according to any one of the preceding claims, **characterized in that** the drive device is disposed in an inner space of the central inner part.

7. The solar cell assembly according to any one of the preceding claims, **characterized in that** the wings (34) have a wing length determined transversely to their pivot axis (42) which is greater than the distance of the apex (32) of the central inner part (30) from the base (20).

8. The solar cell assembly according to any one of the preceding claims, **characterized in that** the wings (34) are rectangular.

9. The solar cell assembly according to any one of the preceding claims, **characterized in that** the base (20) is a regular n-gon with n side edges (22, 24) of equal length, and that the angles between adjacent side edges (22, 24) are equal to each other.

10. The solar cell assembly according to any one of the preceding claims, **characterized in that** the drive device (38), in a 1^{st} operational state, pivots all wings (34) simultaneously and synchronously.

11. The solar cell assembly according to any one of the preceding claims, **characterized in that** the central inner part (30) is internally hollow.

## Revendications

1. Ensemble de cellules solaires destiné à générer de l'énergie électrique à partir de la lumière, comprenant
- une pluralité de cellules solaires (36),
- une base (20) qui présente plusieurs bords latéraux (22, 24),
- un axe central (28) qui s'étend transversalement à la base (20),
- une pluralité d'ailes (34), dans lequel respectivement une aile (34) est articulée sur un bord latéral (22, 24) de la base (20) de manière à pouvoir pivoter autour d'un axe de pivotement (42),
- les cellules solaires (36) sont disposées sur une face supérieure des ailes (34) qui est tournée vers l'axe central (28),
- un dispositif d'entraînement (38) pour faire pivoter les ailes (34) autour de leur axe de pivotement (42) respectif, et
- une partie intérieure centrale (30) qui est fixée sur la base (20) et qui présente des surfaces extérieures qui sont munies de cellules solaires (36) et/ou de miroirs,
**caractérisé par le fait que** la partie intérieure centrale (30) présente la forme d'une pyramide, d'un cône ou d'une calotte sphérique, que la partie intérieure centrale (30) comprend une surface de base qui présente des dimensions qui correspondent pour plus de 80 % à des dimensions de même sens de la base (20), que la partie centrale intérieure (30) présente un sommet (32) qui est le plus éloigné de la base (20) et qui se situe sur l'axe central (28), et que les ailes (34) individuelles peuvent pivoter à partir d'une position angulaire dans laquelle elles se trouvent dans le plan de la base (20) au moins jusqu'à une position angulaire dans laquelle elles sont en appui contre la partie intérieure centrale (30).

2. Ensemble de cellules solaires selon la revendication 1, **caractérisé par le fait que** la base (20) est un polygone à n bords latéraux (22, 24) de même longueur, et qu'il y a n ailes (34), où n est un nombre naturel, de préférence n présente la valeur de 4 ou de 6.

3. Ensemble de cellules solaires selon l'une quelconque des revendications précédentes, **caractérisé par le fait que** la partie intérieure centrale (30) présente une symétrie de rotation autour de l'axe central, qui est de 360°/n, où n est le nombre des bords latéraux (22, 24) de la base (20) qui est un polygone régulier.

4. Ensemble de cellules solaires selon l'une quelconque des revendications précédentes, **caractérisé par le fait que** la partie intérieure centrale (30) présente une surface de base qui présente des dimensions qui correspondent pour plus de 90 % à des dimensions de même sens de la base (20).

5. Ensemble de cellules solaires selon l'une quelconque des revendications précédentes, **caractérisé par le fait qu'**il comprend en outre un dispositif de commande (44) qui est disposé dans un espace intérieur de la partie intérieure centrale (30).

6. Ensemble de cellules solaires selon l'une quelconque des revendications précédentes, **caractérisé par le fait que** le dispositif d'entraînement est disposé dans un espace intérieur de la partie intérieure centrale.

7. Ensemble de cellules solaires selon l'une quelconque des revendications précédentes, **caractérisé par le fait que** les ailes (34) présentent une longueur d'aile déterminée transversalement à leur axe de pivotement (42), qui est supérieure à la distance séparant le sommet (32) de la partie intérieure centrale (30) et la base (20).

8. Ensemble de cellules solaires selon l'une quelconque des revendications précédentes, **caractérisé par le fait que** les ailes (34) sont rectangulaires.

9. Ensemble de cellules solaires selon l'une quelconque des revendications précédentes, **caractérisé par le fait que** la base (20) est un n-gone régulier ayant n bords latéraux (22, 24) de même longueur, et que les angles formés entre des bords latéraux (22, 24) adjacents sont identiques.

10. Ensemble de cellules solaires selon l'une quelconque des revendications précédentes, **caractérisé par le fait que** le dispositif d'entraînement (38) fait pivoter toutes les ailes (34) simultanément et de manière synchrone dans un premier état de fonctionnement.

11. Ensemble de cellules solaires selon l'une quelconque des revendications précédentes, **caractérisé par le fait que** la partie intérieure centrale (30) est creuse à l'intérieur.
